# EUROPEAN PATENT APPLICATION

(11) **EP 4 848 394 A1**
(43) Date of publication of application: **02.12.2026**
(21) Application number: 26207028.7
(22) Date of filing: 23.09.2026
(51) Int. Cl.: H01M 10/054, H01M 4/40, H01M 4/50, H01M 4/58, H01M 4/485, H01M 4/505, H01M 4/525, H01M 10/0566, H01M 10/0567, H01M 10/0568, H01M 10/0569

(54) **NON-AQUEOUS ELECTROLYTE AND SODIUM ION BATTERY INCLUDING THE SAME**

(30) Priority: 26.09.2025 CN 202511389186
(71) Applicant: Zhuhai Smoothway Electronic Materials Co., Ltd., Zhuhai City, Guangdong Province (CN)
(72) Inventor: Huang, Qiujie, Zhuhai City, Guangdong Province (CN); Wang, Pipi, Zhuhai City, Guangdong Province (CN); Mao, Chong, Zhuhai City, Guangdong Province (CN); Wang , Xiaoqiang, Zhuhai City, Guangdong Province (CN); Ou, Shuanghui, Zhuhai City, Guangdong Province (CN); Wu, Dongqing, Zhuhai City, Guangdong Province (CN); Zhang, Caixia, Zhuhai City, Guangdong Province (CN); Yang, Lewen, Zhuhai City, Guangdong Province (CN); Dai, Xiaobing, Zhuhai City, Guangdong Province (CN); Lv, Haixia, Zhuhai City, Guangdong Province (CN)
(74) Representative: Meyer, Thorsten

(57) **Abstract**

A non-aqueous electrolyte includes an electrolyte salt, a non-aqueous organic solvent, and additives. The additives comprise a sodium oxalate salt compound and a fluorosulfonyl-containing zwitterionic compound, and the fluorosulfonyl-containing zwitterionic compound has a structure as shown in Formula I. In the non-aqueous electrolyte, the synergistic action between the fluorosulfonyl-containing zwitterionic compound and the sodium oxalate salt compound optimizes the solvation environment of the electrolyte while enabling the formation of a highly stable and durable SEI, thereby enabling highly reversible sodium-ion storage and stable long-term cycling, and consequently improving the initial Coulombic efficiency and the high- and low-temperature performance of the sodium-ion battery.

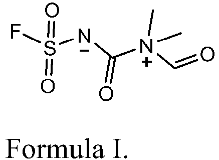

## Description

### FIELD OF THE INVENTION

The present invention relates to the technical field of secondary batteries, and in particular to a non-aqueous electrolyte and a sodium-ion battery including the same.

### BACKGROUND OF THE INVENTION

Sodium-ion batteries generally suffer from low initial Coulombic efficiency (ICE) during the initial cycle, which is mainly attributed to the loss of active sodium ions during the initial charge/discharge process. The root cause lies in the formation of solid electrolyte interphase (SEI) and cathode electrolyte interphase (CEI) films on electrode surfaces, the formation and disruption of which consume substantial amounts of sodium ions. Compared with graphite anodes for lithium-ion batteries, hard carbon anodes for sodium-ion batteries possess more structural defects (e.g., vacancies, heteroatoms), which exacerbate side reactions at the electrolyte/anode interface and increase the irreversible capacity loss during the initial charging process, thereby further reducing ICE.

Most positive electrode materials for sodium-ion batteries have lower sodium content than their lithium-ion counterparts, which further compounds the problem. Low ICE in sodium-ion batteries results in loss of active sodium, inefficient utilization of electrode active materials, reduced practical energy density, increased cost, and compromised cycle performance.

To address this issue, the introduction of presodiation agents is critical. By adding sodium-rich compounds or employing pre-sodiation techniques, the sodium ions lost during initial charge/discharge can be effectively replenished, thereby enhancing the ICE, energy density, and cycling stability.

Presodiation agents generally refer to materials capable of decomposing and releasing sodium ions during battery operation. In this way, presodiation agents effectively compensate for the sodium loss caused by SEI and CEI formation. Such supplements typically exhibit high theoretical capacity and, by releasing sodium ions, compensate for the sodium consumed by side reactions, thereby improving the ICE and cycle performance. Currently, prelithiation agents used in the lithium-ion battery industry are mostly lithium-rich structures such as lithium ferrite (Li₅FeO₄) and lithium manganate, which have high theoretical capacities. However, the corresponding sodium ferrite and sodium manganate do not possess analogous lithium-rich structures.

The presodiation agents currently used in sodium-ion batteries include the following categories. (1) Sodium-metal-based (anode-side sodiation): sodium powder and sodium ribbon are costly, difficult to process, have poor ambient stability, and present safety concerns. (2) Inorganic compounds: Na₃P, Na₃N, Na₂S, and NaNO₂, and the like exhibit low gas evolution but suffer from poor ambient stability. Na₃P is toxic, and NaNO₂ and the like leave solid residues in layered oxide-based positive electrode materials, thereby increasing battery impedance. (3) Organic compounds: sodium oxalate and its derivatives exhibit significant gas evolution but leave no solid residues and are low-cost.

Therefore, there is an urgent need for a non-aqueous electrolyte and a sodium-ion battery thereof that overcome the deficiencies of the prior art.

### SUMMARY OF THE INVENTION

The objective of the present invention is to provide a non-aqueous electrolyte and a sodium-ion battery thereof. In the non-aqueous electrolyte of the present invention, the synergistic action between a fluorosulfonyl-containing zwitterionic compound and a sodium oxalate salt compound optimizes the solvation environment of the electrolyte while enabling the formation of a highly stable and durable SEI, thereby enabling highly reversible sodium-ion storage and stable long-term cycling, and consequently improving the ICE and the high- and low-temperature performance of the sodium-ion battery.

To achieve the above objective, as a first aspect, the present invention provides a non-aqueous electrolyte, comprising an electrolyte salt, a non-aqueous organic solvent, and additives, wherein the additives comprise a sodium oxalate salt compound and a fluorosulfonyl-containing zwitterionic compound, and the fluorosulfonyl-containing zwitterionic compound has a structure as shown in Formula I:

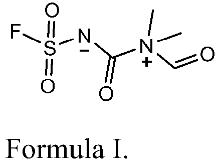

Compared with the prior art, the additives of the non-aqueous electrolyte of the present invention comprises a fluorosulfonyl-containing zwitterionic compound. The FSO₂N⁻/C(=O)N⁺ groups in this compound can, on the one hand, undergo adsorptive pairing with electrolyte ions (e.g., Na⁺/PF₆⁻), thereby regulating the solvation behavior of electrolyte ions in the multi-component solvent by modulating ion-dipole and dipole-dipole interactions, weakening the complexation between co-solvents and ions, lowering the desolvation energy barrier at the interface, and mitigating the risks associated with solvent co-intercalation, while substantially enhancing ion transport and desolvation kinetics at the interface. On the other hand, the zwitterionic compound decomposes during battery charge/discharge and, through synergistic interaction with the sodium oxalate salt compound, is reduced and participates in the construction of the SEI film. TThe resulting inorganic-rich SEI film, dominated by F⁻, N⁻, and S-containing inorganic species, enhances interfacial chemical stability and promotes ion transport kinetics at the interface, thereby enabling highly reversible sodium-ion storage and stable long-term cycling, and consequently improving the ICE and the high- and low-temperature performance of the sodium-ion battery.

As a preferable embodiment, the sodium oxalate salt compound comprises one or more selected from the group consisting of a sodium oxalatoborate salt and a sodium oxalatophosphate salt.

As a preferable embodiment, the sodium oxalate salt compound comprises one or more selected from the group consisting of compounds B1 to B4:

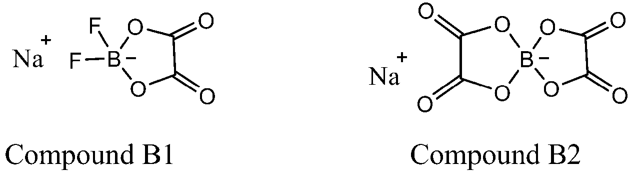

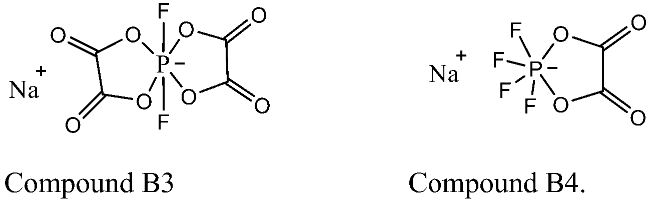

As a preferable embodiment, the fluorosulfonyl-containing zwitterionic compound is present in the non-aqueous electrolyte in an amount of 0.1% to 2.0% by mass.

As a preferable embodiment, the sodium oxalate salt compound is present in the non-aqueous electrolyte in an amount of 0.1% to 1.0% by mass.

As a preferable embodiment, the electrolyte salt is present in the non-aqueous electrolyte in an amount of 10% to 25% by mass, and the electrolyte salt comprises one or more selected from the group consisting of sodium hexafluorophosphate, sodium perchlorate, sodium tetrafluoroborate, sodium trifluoromethanesulfonate, sodium bis(trifluoromethanesulfonyl)imide, sodium difluorophosphate, and sodium bis(fluorosulfonyl)imide.

As a preferable embodiment, the electrolyte salt comprises sodium hexafluorophosphate, sodium bis(fluorosulfonyl)imide, or a combination thereof.

As a preferable embodiment, the non-aqueous organic solvent comprises one or more selected from the group consisting of chain carbonates, cyclic carbonates, and carboxylate esters.

As a second aspect, the present invention provides a sodium-ion battery, comprising a positive electrode material, a negative electrode material, and the non-aqueous electrolyte mentioned above. In the non-aqueous electrolyte of the sodium-ion battery according to the present invention, the synergistic action between the fluorosulfonyl-containing zwitterionic compound and the sodium oxalate salt compound optimizes the solvation environment of the electrolyte while enabling the formation of a highly stable and durable SEI, thereby enabling highly reversible sodium-ion storage and stable long-term cycling, and consequently improving the ICE and the high- and low-temperature performance of the sodium-ion battery.

As a preferable embodiment, the positive electrode material comprises a polyanionic phosphate-based positive electrode material or a layered oxide.

As a preferable embodiment, the layered oxide has a chemical formula NaₓM_{(1-y-z)}Fe_{y}Mn_{z}O₂, wherein M comprises one or more selected from the group consisting of Co, Ni, Cu, Mg, Zn, Al, Sn, Ga, Cr, Sr, V, and Ti, with 0<x≤1, 0<y<1, 0<z<1, and y+z≤1.

As a preferable embodiment, the polyanionic phosphate-based positive electrode material has a chemical formula Na₄Fe₃(PO₄)₂P₂O_{7.}

As a preferable embodiment, the negative electrode material comprises one or more selected from the group consisting of carbon-based materials, titanium-based materials, and alloy-based materials.

### DETAILED DESCRIPTION OF ILLUSTRATED EMBODIMENTS

The sodium-ion battery of the present invention comprises a positive electrode material, a negative electrode material, and a non-aqueous electrolyte.

The positive electrode material may include a layered oxide or a polyanionic phosphate-based positive electrode material. The layered oxide has a chemical formula NaₓM_{(1-y-z)}Fe_{y}Mn_{z}O₂, wherein M comprises one or more selected from the group consisting of Co, Ni, Cu, Mg, Zn, Al, Sn, Ga, Cr, Sr, V, and Ti, with 0<x≤1, 0<y<1, 0<z<1, and y+z≤1. The polyanionic phosphate-based positive electrode material has a chemical formula Na₄Fe₃(PO₄)₂P₂O₇.

The negative electrode material comprises one or more selected from the group consisting of carbon-based materials, titanium-based materials, and alloy-based materials. Specifically, the carbon-based material comprises one or more selected from the group consisting of artificial graphite, natural graphite, soft carbon, and hard carbon. The titanium-based material is selected from Na₂Ti₃O₇, Na_{0.6}[Cr_{0.6}Ti_{0.4}]O₂, Li₄Ti₅O₁₂, NaTiOPO₄, NASICON, and NaTi₂(PO₄)₃. The alloy-based material is an alloy formed from Sn, Sb, or In. By way of example, the negative electrode material of the present invention is selected from artificial graphite.

The non-aqueous electrolyte comprises an electrolyte salt, a non-aqueous organic solvent, and additives.

The electrolyte salt is present in the non-aqueous electrolyte in an amount of 10% to 25% by mass, and further in an amount of 10% to 14% by mass. By way of example, the mass percentage of the electrolyte salt may be, but is not limited to, 10%, 11%, 12%, 13%, 14%, 15%, 16%, 17%, 18%, 19%, 20%, 21%, 22%, 23%, 24%, or 25%. The mass percentage is not limited to the recited values, and other unrecited values within this range are equally applicable.

The electrolyte salt comprises one or more selected from the group consisting of sodium hexafluorophosphate (NaPF₆), sodium perchlorate (NaClO₄), sodium tetrafluoroborate (NaBF₄), sodium trifluoromethanesulfonate (NaCF₃SO₃), sodium bis(trifluoromethanesulfonyl)imide (NaTFSI), sodium difluorophosphate (NaPO₂F₂), and sodium bis(fluorosulfonyl)imide (NaFSI). Preferably, the electrolyte salt comprises sodium hexafluorophosphate, sodium bis(fluorosulfonyl)imide, or a combination thereof. More preferably, the electrolyte salt is a mixture of sodium hexafluorophosphate and sodium bis(fluorosulfonyl)imide, with sodium hexafluorophosphate accounting for 10% to 60% by mass of the electrolyte salt, and preferably 40% to 60% by mass. By way of example, sodium hexafluorophosphate accounts for 10%, 15%, 20%, 25%, 30%, 35%, 40%, 45%, 50%, 55%, or 60% by mass of the electrolyte salt.

The non-aqueous organic solvent comprises one or more selected from the group consisting of chain carbonates, cyclic carbonates, and carboxylate esters. Specifically, chain carbonates include, but are not limited to, dimethyl carbonate (DMC), diethyl carbonate (DEC), and ethyl methyl carbonate (EMC). Cyclic carbonates may be, but are not limited to, ethylene carbonate (EC), propylene carbonate (PC), butylene carbonate (BC), pentylene carbonate, vinylene carbonate (VC), or derivatives thereof. Carboxylate esters include, but are not limited to, cyclic carboxylate esters and chain carboxylate esters. Cyclic carboxylate esters may specifically include, but are not limited to, one or more selected from the group consisting of γ-butyrolactone, γ-valerolactone, and δ-valerolactone. Chain carboxylate esters include, but are not limited to, one or more selected from the group consisting of methyl acetate (MA), ethyl acetate (EA), propyl acetate (PA), butyl acetate, propyl propionate (PP), ethyl propionate, butyl propionate, and ethyl butyrate.

The additives comprise a sodium oxalate salt compound and a fluorosulfonyl-containing zwitterionic compound.

The fluorosulfonyl-containing zwitterionic compound has a structure as shown in Formula I:

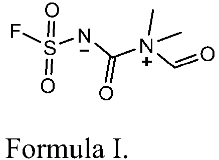

The fluorosulfonyl-containing zwitterionic compound may be prepared according to the following synthetic route:

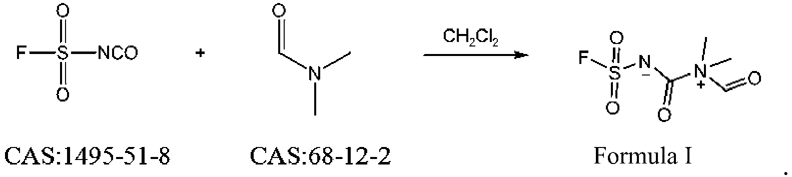

The fluorosulfonyl-containing zwitterionic compound is present in the non-aqueous electrolyte in an amount of 0.1% to 2.0% by mass, and further in an amount of 0.5% to 1.0% by mass. By way of example, the mass percentage of the fluorosulfonyl-containing zwitterionic compound may be, but is not limited to, 0.1%, 0.2%, 0.3%, 0.4%, 0.5%, 0.6%, 0.7%, 0.8%, 0.9%, 1.0%, 1.2%, 1.4%, 1.5%, 1.6%, 1.8%, or 2.0%. The mass percentage is not limited to the recited values, and other unrecited values within this range are equally applicable.

The sodium oxalate salt compound is a salt having an oxalate complex as an anion. The sodium oxalate salt compound comprises one or more selected from the group consisting of sodium oxalatoborate salts and sodium oxalatophosphate salts. Further, the sodium oxalate salt compound comprises one or more selected from the group consisting of compounds B1 to B4:

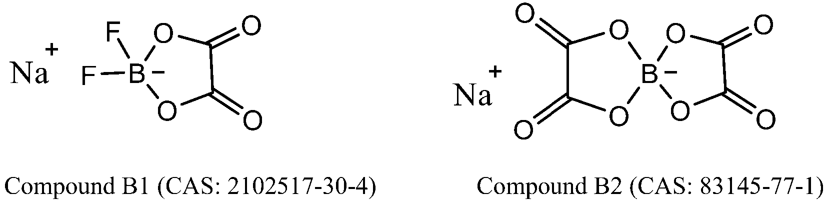

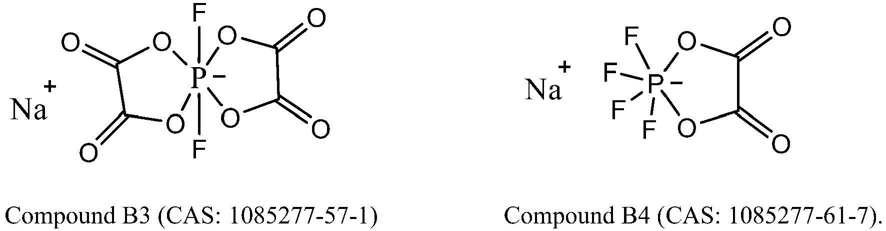

The sodium oxalate salt compound is present in the non-aqueous electrolyte in an amount of 0.1% to 1.0% by mass, and further in an amount of 0.1% to 0.5% by mass. By way of example, the mass percentage of the sodium oxalate salt compound may be, but is not limited to, 0.1%, 0.2%, 0.3%, 0.4%, 0.5%, 0.6%, 0.7%, 0.8%, 0.9%, or 1.0%. The mass percentage is not limited to the recited values, and other unrecited values within this range are equally applicable.

To better illustrate the objective, technical solutions, and beneficial effects of the present invention, the invention will be further described below with reference to specific examples. It should be noted that the following examples are provided for further explanation of the present invention and should not be construed as limiting the scope thereof.

In the present invention, unless otherwise specified, the raw materials used in the examples and comparative examples may be processed under conventional conditions or conditions recommended by the manufacturer, and the reagents or instruments for which the manufacturer is not indicated are commercially available conventional products.

### [Example 1]

### 1.1 Preparation of Electrolyte

Under an argon atmosphere, in a vacuum glove box with a moisture content of <1 ppm, the electrolyte was prepared. Propylene carbonate (PC), ethyl methyl carbonate (EMC), and diethyl carbonate (DEC) were mixed in a weight ratio of PC:EMC:DEC = 1:1:1 to obtain 84.7 g of a mixed solvent as the organic solvent. Then, 1.0 g of Compound A and 0.3 g of Compound B1 were added to obtain a mixed solution. The mixed solution was sealed and held in a cold chamber at -4°C for 2 hours. Subsequently, 14.0 g of sodium hexafluorophosphate (NaPF₆) was slowly added to the mixed solution, and the mixture was uniformly mixed to obtain an electrolyte.

### 1.2 Preparation of Positive Electrode Plate

NaNi_{0.3}Mn_{0.3}Fe_{0.3}O₂ material, binder PVDF, and conductive agent Super P were mixed uniformly in a mass ratio of 95:1:4 to prepare a sodium-ion battery positive electrode slurry of suitable viscosity. The slurry was coated onto both sides of an aluminum foil, dried, and calendered to obtain a positive electrode plate.

### 1.3 Preparation of Negative Electrode Plate

Artificial graphite, conductive agent Super P, thickener CMC, and binder SBR (styrene-butadiene rubber emulsion) were mixed in a mass ratio of 95:1.5:1.0:2.5 to form a slurry, which was uniformly mixed. The slurry was coated onto both sides of a copper foil, dried, and calendered to obtain a negative electrode plate.

### 1.4 Preparation of Sodium-Ion Battery

The positive electrode plate, separator, and negative electrode plate were assembled into a prismatic cell by stacking, packaged in a polymer pouch, filled with the electrolyte prepared above, and subjected to formation and grading processes to produce a sodium-ion battery with a capacity of 1500 mAh.

The compositions and contents of the electrolytes of Examples 1 to 11 and Comparative Examples 1 to 3 are shown in Table 1. The preparation processes for the electrolytes, positive electrode plates, negative electrode plates, and sodium-ion batteries of Examples 2 to 11 and Comparative Examples 1 to 3 were the same as those in Example 1.

**Table 1 -- Compositions of Electrolytes of Examples and Comparative Examples**

| Group | Electrolyte Salt/(g) | Non-aqueous Organic Solvent/(g) | Additive/(g) | |
|---|---|---|---|---|
| Example 1 | NaPF₆/14.0 | PC:EMC:DEC=1:1:1/84.7 | Compound A/1.0 | Compound B1/0.3 |
| Example 2 | NaPF₆/14.0 | PC:EMC:DEC=1:1:1/84.7 | Compound A/1.0 | Compound B2/0.3 |
| Example 3 | NaPF₆/14.0 | PC:EMC:DEC=1:1:1/84.7 | Compound A/1.0 | Compound B3/0.3 |
| Example 4 | NaPF₆/14.0 | PC:EMC:DEC=1:1:1/84.7 | Compound A/1.0 | Compound B4/0.3 |
| Example 5 | NaPF₆/14.0 | PC:EMC:DEC=1:1:1/85.4 | Compound A/0.5 | Compound B1/0.1 |
| Example 6 | NaPF₆/14.0 | PC:EMC:DEC=1:1:1/84.0 | Compound A/1.5 | Compound B1/0.5 |
| Example 7 | NaPF₆/7.0 | PC:EMC:DEC=1:1:1/83.7 | Compound A/2.0 | Compound B1/0.3 |
| | NaFSI/7.0 | | | |
| Example 8 | NaPF₆/7.0 | PC:EMC:DEC=1:1:1/84.7 | Compound A/1.0 | Compound B1/0.3 |
| | NaFSI/7.0 | | | |
| Example 9 | NaPF₆/12.0 | PC:EMC:DEC=1:1:1/86.7 | Compound A/1.0 | Compound B1/0.3 |
| Example 10 | NaPF₆/14.0 | PC:EMC:DEC=1:2:1/84.7 | Compound A/1.0 | Compound B1/0.3 |
| Example 11 | NaPF₆/14.0 | PC:PP:DMC=1:1:1/84.7 | Compound A/1.0 | Compound B1/0.3 |
| Comparative Example 1 | NaPF₆/14.0 | PC:EMC:DEC=1:1:1/86.0 | \ | \ |
| Comparative Example 2 | NaPF₆/14.0 | PC:EMC:DEC=1:1:1/85.0 | Compound A/1.0 | \ |
| Comparative Example 3 | NaPF₆/14.0 | PC:EMC:DEC=1:1:1/85.7 | \ | Compound B1/0.3 |

| | | | | |
|---|---|---|---|---|
| Note: In Table 1, Compound A is the fluorosulfonyl-containing zwitterionic compound having the structure shown in Formula I of the present invention. | | | | |

The sodium-ion batteries prepared in Examples 1 to 11 and Comparative Examples 1 to 3 were tested for performance under the following conditions, and the results are shown in Table 2.

### (1) Initial Coulombic Efficiency Test

The sodium-ion batteries were placed in a high-temperature, high-pressure formation cabinet and subjected to a three-step formation process at 25°C under a pressure of 0.28 MPa (applied to 4 cells). In a first step, the batteries were charged at a constant current of 0.05C for 60 min, and the charge capacity was recorded as C₁. In a second step, the batteries were charged at a constant current of 0.1C for 120 min, and the charge capacity was recorded as C₂. In a third step, the batteries were charged at a constant current of 0.2C for 240 min, and the charge capacity was recorded as C₃, with the upper voltage limit of 3.9 V. The batteries were then vacuum-sealed using a rotary sealer. Subsequently, at room temperature, the batteries were charged at a constant current of 0.5C to 4.1 V, then charged at a constant voltage of 4.1 V until the current dropped to 0.05C, and then discharged at a constant current of 1C to 2.5 V, and the first discharge capacity C₀ was recorded. The initial Coulombic efficiency was calculated as follows:
$Initial Coulombic efficiency = {C}_{0} / \left({C}_{1}+{C}_{2}+{C}_{3}\right) \times 100 % .$

### (2) High-Temperature Cycle Test of Sodium-Ion Batteries

The sodium-ion batteries were placed in a constant-temperature oven at 45°C and allowed to stand for 30 min to reach thermal equilibrium. The batteries were charged at a constant current of 2C to 4.1 V, then charged at a constant voltage of 4.1 V until the current dropped to 0.05C, and then discharged at a constant current of 2C to 2.0 V. The first-cycle discharge capacity was recorded, and this constituted one charge/discharge cycle. After 400 cycles, the discharge capacities of the first cycle and the last cycle were recorded, and the capacity retention rate was calculated as follows: 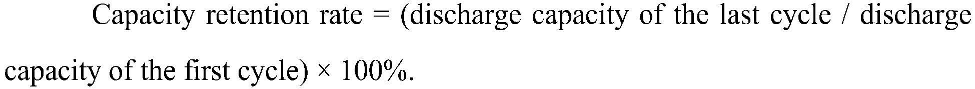 Capacity retention rate = (discharge capacity of the last cycle / discharge capacity of the first cycle) × 100%.

### (3) High-Temperature Storage Test of Sodium-Ion Batteries

At room temperature (25°C), the sodium-ion batteries were subjected to one charge/discharge cycle at 0.5C/0.5C (the discharge capacity was recorded as C₀), with an upper voltage limit of 4.1 V. The batteries were then charged to 4.1 V under constant-current constant-voltage conditions at 0.5C, and the battery thickness was measured (recorded as D₀). The batteries were placed in an oven at 60°C for 30 days, then removed, and the battery thickness was measured again (recorded as D₁). The thickness expansion rate was calculated as follows: $Thickness expansion rate = \left({D}_{1}-{D}_{0}\right) / {D}_{0} \times 100 % .$

### (4) Low-Temperature Discharge Test

At room temperature (25°C), the sodium-ion batteries were subjected to one charge/discharge cycle at 0.5C/0.5C (the discharge capacity was recorded as C₀), with an upper voltage limit of 4.1 V. The batteries were then placed in a low-temperature chamber at -10°C and discharged at a constant current of 0.1C to 2.0 V. The first-cycle discharge capacity C₁ was recorded, and this constituted one charge/discharge cycle. The batteries were then returned to room temperature (25°C) and subjected to one charge/discharge cycle at 0.5C/0.5C (the discharge capacity was recorded as C₂). After 10 cycles, the capacity recovery rate was calculated as follows: $Capacity recovery rate = \left({C 2 / C}_{0}\right) \times 100 % .$

**Table 2 -- Performance Test Results of Sodium-Ion Batteries**

| Group | Initial Coulombic Efficiency/% | High-Temperature Cycle Capacity retention rate/% | High-Temperature Storage Thickness Expansion Rate/% | Low-Temperature Discharge Capacity Recovery Rate/% |
|---|---|---|---|---|
| Example 1 | 88 | 86 | 5 | 82 |
| Example 2 | 87 | 84 | 4 | 83 |
| Example 3 | 86 | 87 | 5 | 81 |
| Example 4 | 85 | 89 | 6 | 80 |
| Example 5 | 86 | 86 | 5 | 82 |
| Example 6 | 83 | 85 | 7 | 81 |
| Example 7 | 82 | 83 | 8 | 80 |
| Example 8 | 89 | 88 | 4 | 83 |
| Example 9 | 88 | 85 | 4 | 83 |
| Example 10 | 88 | 86 | 3 | 83 |
| Example 11 | 88 | 87 | 4 | 84 |
| Comparative Example 1 | 52 | 49 | 15 | 50 |
| Comparative Example 2 | 53 | 53 | 13 | 58 |
| Comparative Example 3 | 54 | 57 | 12 | 54 |

As can be seen from the results in Table 2, as compared with Comparative Examples 1 to 3, Examples 1 to 11, which employ a synergistic combination of a fluorosulfonyl-containing zwitterionic compound and a sodium oxalate salt, exhibit significantly improved initial Coulombic efficiency and high- and low-temperature performance. The additives of the non-aqueous electrolyte of the present invention include a fluorosulfonyl-containing zwitterionic compound, in which the FSO₂N⁻/C(=O)N⁺ groups can, on the one hand, undergo adsorptive pairing with electrolyte ions (e.g., Na⁺/PF₆⁻), thereby regulating the solvation behavior of electrolyte ions in the multi-component solvent by modulating ion-dipole and dipole-dipole interactions, weakening the complexation between co-solvents and ions, lowering the desolvation energy barrier at the interface, and mitigating the risks associated with solvent co-intercalation, while substantially enhancing ion transport and desolvation kinetics at the interface. On the other hand, the zwitterionic compound decomposes during battery charge/discharge and, through synergistic interaction with the sodium oxalate salt compound, is reduced and participates in the construction of the SEI film. The resulting inorganic-rich SEI film, dominated by F-, N-, and S-containing inorganic species, enhances interfacial chemical stability and promotes ion transport kinetics at the interface, thereby enabling highly reversible sodium-ion storage and stable long-term cycling, and consequently improving the initial Coulombic efficiency and the high- and low-temperature performance of the sodium-ion battery.

A further comparison between Example 1 and Example 8 shows that when a mixed electrolyte salt composed of sodium hexafluorophosphate and sodium bis(fluorosulfonyl)imide is used, superior high- and low-temperature performance is achieved. This may be attributed to the fact that sodium hexafluorophosphate has good film-forming ability and can form a stable, dense, and low-impedance solid electrolyte interphase (SEI) film on the anode (e.g., hard carbon), but has poor thermal and chemical stability and is prone to decomposition to generate harmful substances such as HF, especially at elevated temperatures or in the presence of moisture. In contrast, sodium bis(fluorosulfonyl)imide possesses exceptionally high thermal and chemical stability and far superior hydrolysis resistance compared to sodium hexafluorophosphate. In addition, sodium bis(fluorosulfonyl)imide has higher ionic conductivity, which helps reduce the internal resistance of the battery and thereby improves low-temperature performance.

Finally, it should be noted that the above examples are merely illustrative of the technical solutions of the present invention and are not intended to limit the scope of protection thereof. Although the present invention has been described in detail with reference to the preferred examples, it is not limited to the examples listed therein. A person of ordinary skill in the art will appreciate that various modifications or equivalent substitutions may be made to the technical solutions of the present invention without departing from the spirit and scope thereof.

## Claims

1. A non-aqueous electrolyte, comprising an electrolyte salt, a non-aqueous organic solvent, and additives, wherein the additives comprise a sodium oxalate salt compound and a fluorosulfonyl-containing zwitterionic compound, and the fluorosulfonyl-containing zwitterionic compound has a structure as shown in Formula I:

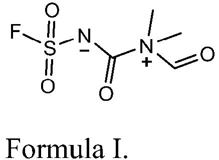

2. The non-aqueous electrolyte according to claim 1, wherein the sodium oxalate salt compound comprises one or more selected from the group consisting of a sodium oxalatoborate salt and a sodium oxalatophosphate salt.

3. The non-aqueous electrolyte according to claim 1 or 2, wherein the sodium oxalate salt compound comprises one or more selected from the group consisting of compounds B1 to B4:

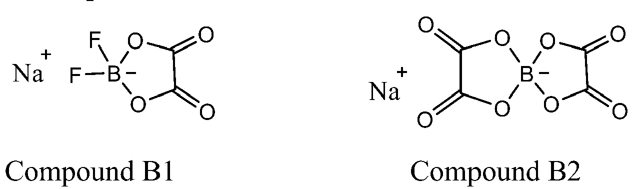

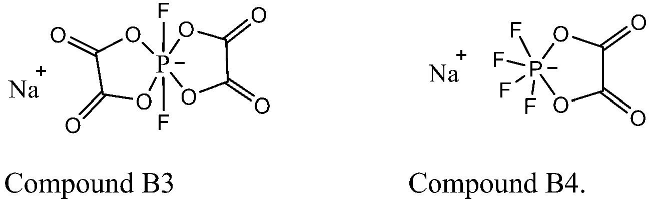

4. The non-aqueous electrolyte according to claim 1 or 2, wherein the fluorosulfonyl-containing zwitterionic compound is present in the non-aqueous electrolyte in an amount of 0.1% to 2.0% by mass.

5. The non-aqueous electrolyte according to claim 1 or 2, wherein the sodium oxalate salt compound is present in the non-aqueous electrolyte in an amount of 0.1% to 1.0% by mass.

6. The non-aqueous electrolyte according to claim 1 or 2, wherein the electrolyte salt is present in the non-aqueous electrolyte in an amount of 10% to 25% by mass, and the electrolyte salt comprises one or more selected from the group consisting of sodium hexafluorophosphate, sodium perchlorate, sodium tetrafluoroborate, sodium trifluoromethanesulfonate, sodium bis(trifluoromethanesulfonyl)imide, sodium difluorophosphate, and sodium bis(fluorosulfonyl)imide.

7. The non-aqueous electrolyte according to claim 6, wherein the electrolyte salt comprises sodium hexafluorophosphate, sodium bis(fluorosulfonyl)imide, or a combination thereof.

8. The non-aqueous electrolyte according to claim 1 or 2, wherein the non-aqueous organic solvent comprises one or more selected from the group consisting of chain carbonates, cyclic carbonates, and carboxylate esters.

9. A sodium-ion battery, comprising a positive electrode material, a negative electrode material, and the non-aqueous electrolyte according to any one of claims 1 to 8.

10. The sodium-ion battery according to claim 9, wherein the positive electrode material comprises a layered oxide or a polyanionic phosphate-based positive electrode material, the layered oxide having a chemical formula NaₓM_{(1-y-z)}Fe_{y}Mn_{z}O₂, wherein M comprises one or more selected from the group consisting of Co, Ni, Cu, Mg, Zn, Al, Sn, Ga, Cr, Sr, V, and Ti, with 0<x≤1, 0<y<1, 0<z<1, and y+z≤1; the polyanionic phosphate-based positive electrode material has a chemical formula Na₄Fe₃(PO₄)₂P₂O₇; and the negative electrode material comprises one or more selected from the group consisting of carbon-based materials, titanium-based materials, and alloy-based materials.
